Europäisches Patentamt

European Patent Office

Office européen des brevets

(19)

(11) Veröffentlichungsnummer : **0 162 967**
**B1**

(12) **EUROPÄISCHE PATENTSCHRIFT**

(45) Veröffentlichungstag der Patentschrift :
**28.03.90**

(21) Anmeldenummer : **84116469.2**

(22) Anmeldetag : **28.12.84**

(51) Int. Cl.$^5$ : **G 09 B 19/00**

(54) **Verfahren zum Anwenden einer Datenverarbeitungsdanlage zum Unterweisen in ihre Bedienung und Einrichtung zum Durchführen des Verfahrens.**

(30) Priorität : **03.04.84 DE 3412457**

(43) Veröffentlichungstag der Anmeldung :
**04.12.85 Patentblatt 85/49**

(45) Bekanntmachung des Hinweises auf die Patenterteilung : **28.03.90 Patentblatt 90/13**

(84) Benannte Vertragsstaaten :
**CH DE FR GB IT LI NL SE**

(56) Entgegenhaltungen :
**DE--A-- 2 839 534
DE--A-- 3 226 287
COMPUTERS & GRAPHICS, Band 6, Nr. 1, 1982, Oxford, GB; P.S. HAMILTON et al. "Implementation of Computer Graphics Exercises in Freshman Enginee-ring Graphics Education", Seiten 29-34
IEE PROCEEDINGS SECTIONS Aal, Band 130, Nr. 3, Teil E, 1983, Old Woking, Surrey, GB; A.J.D. CASACA et al. "Teaching digital-systems design with a micro-processor-controlled patchboard", Seiten 75-82**

(73) Patentinhaber : **Nixdorf Computer Aktiengesellschaft
Fürstenallee 7
D-4790 Paderborn (DE)**

(72) Erfinder : **Rethans, Michael
Boomstede 357
NL-3608 BB Maarssen (NL)**
Erfinder : **Verhallen, Hans
Adelaan 30
NL-5348 EK Oss (NL)**
Erfinder : **Van den Steene, Jos
Loderstraat 61
NL-3052 AL Rotterdam (NL)**

(74) Vertreter : **Schaumburg, Thoenes & Englaender
Mauerkircherstrasse 31 Postfach 86 07 48
D-8000 München 80 (DE)**

## Beschreibung

Die Erfindung betrifft ein Verfahren zum Anwenden einer Datenverarbeitungsanlage mit Informationseingabegerät und Informationsdarstellungsgerät zum Unterweisen in ihre Bedienung. Ferner betrifft die Erfindung eine Einrichtung zum Durchführen des Verfahrens.

Zum Einweisen und Schulen in Gerätehandhabung, Programmieren und Programmbedienung ist es üblich, dem Benutzer einer Datenverarbeitungsanlage mehr oder weniger umfangreiche Bedienerhandbücher zur Verfügung zu stellen oder ihn in Lehrgängen zu schulen. Ersteres hat den Nachteil, daß der Lehrstoff losgelöst von den Dialogmedien der Anlage -Bildschirm und Tastatur- dargeboten wird. Der Vollzug der einzelnen Bedien- oder Programmschritte kann nur beschrieben, nicht aber realistisch dargestellt werden.

Lehrgänge, die sich bisweilen über mehrere Wochen erstrecken, werden bei ständig sinkenden EDV-Anlagen-Preisen zunehmend unökonomischer. So wird der Erwerber einer solchen Anlage nicht bereit sein, einen beachtlichen Teil der Anschaffungskosten noch einmal für die Ausbildung einer Bedienungsperson aufzuwenden.

Bei der Ausbildung auf anderen Sachgebieten, z. B. beim Selbstunterricht in Fremdsprachen, hat man versucht, durch multimediale Informationsdarbietung, z. B. Tonbandkassette zum Buch, vertonte Diaserie oder Tonfilmvorführung, die Unterweisung durch eine Lehrperson zu ersetzen.

Bei der Anwendung auf die Ausbildung an einer Datenverarbeitungsanlage haben die vorgenannten Lehrtechniken den Nachteil, daß das Unterweisen nicht unmittelbar am Arbeitsplatz und somit nicht durch die Dialogmedien Bildschirm und Tastatur erfolgt.

Bei den sogenannten Lehrprogrammen für Computer wird das Prinzip angewendet, einen Lernenden durch Dialog mit dem Computer unter Steuerung durch das In den Computer eingegebene Lehrprogramm durch einen Lehrstoff Zu führen (Computers & Graphics, Band 6, Nr. 1, 1982, Oxford, Seiten 29 bis 34).

Der Erfindung liegt die Aufgabe zugrunde, ein Verfahren anzugeben, bei dem die Datenverarbeitungsanlage selbst zum Unterweisen in ihre Bedienung genutzt wird.

Diese Aufgabe wird für ein Verfahren eingangs genannter Art erfindungsgemäß dadurch gelöst, daß zum Erstellen einer Lektion mit dem Informationseingabegerät Daten eines der Unterweisung Zugrunde liegenden Betriebsablaufs einerseits in die Datenverarbeitungsanlage, andererseits mit dazu synchronen akustischen Informationen in einen separaten Informationsspeicher eingegeben werden und daß beim Nutzen einer Lektion, gesteuert durch das Informationseingabegerät, ein Lesen des separaten Informationsspeichers mit Darstellung und, falls die gelesenen Daten mit einer die Verarbeitung dieser Daten in der Datenverarbeitungsanlage bestimmenden Kennung versehen sind, Eingabe der gelesenen Daten in die Datenverarbeitungsanlage sowie eine dazu synchrone Wiedergabe der akustischen Informationen erfolgt.

Durch die Erfindung wird es möglich, auf dem Sichtgerät einer Datenverarbeitungsanlage sowohl von der Datenverarbeitungsanlage ausgegebene als auch von einem separaten, nicht zur Datenverarbeitungsanlage gehörenden Informationsspeicher stammende Bild- und/oder Schriftzeichen darzustellen, wobei sowohl die Datenverarbeitungsanlage als auch der separate Informationsspeicher durch die dem Sichtgerät zugeordnete Bedientastatur gesteuert wird und wobei von dem separaten Informationsspeicher bildsynchrone akustische Informationen ausgegeben werden.

Ein Verfahren nach der Erfindung kann z. B. so durchgeführt werden, daß der Benutzer im Rahmen einer Lektion den Aufbau und den Ablauf eines Programms akustisch erläutert bekommt, während gleichzeitig die einzelnen Programmschritte optisch dargestellt werden. Dabei beeinflussen die aus dem separaten Informationsspeicher ausgegebenen Daten den Betrieb der Datenverarbeitungsanlage nicht. Es ist aber auch möglich, dem Benutzer im Rahmen einer Lektion Anweisungen zu Eingaben zu geben, die von der Datenverarbeitungsanlage übernommen werden und zu Sichtanzeigen führen, die mit von dem separaten Informationsspeicher ausgegebenen Daten verglichen werden können. Außerdem ist es möglich, die vom separaten Speicher kommenden Daten zwecks weiterer Verarbeitung in die Datenverarbeitungsanlage einzugeben, so daß bei gleichzeitiger akustischer Information die Arbeitsweise der Datenverarbeitungsanlage nicht nur simuliert wird, sondern direkt beobachtet werden kann.

Durch die Erfindung ist es also möglich, direkt an einem Bildschirmarbeitsplatz das Bedienen einer Datenverarbeitungsanlage zu erlernen, da deren Funktionen realistisch dargestellt werden.

Der separate Informationsspeicher — im folgenden auch Lehrstoffspeicher genannt — hat mehrere parallele Speicherkanäle, von denen wenigstens einer als Digitalkanal zum Speichern digitaler Daten und wenigstens ein anderer als Tonkanal zum Speichern akustischer Informationen wie Sprache, Geräusche oder Musik eingerichtet ist.

Zur Darbietung des Lehrstoffs werden die Daten des Digitalkanals auf dem Bildschirm des Bildschirmarbeitsplatzes angezeigt. Dies kann lehrschrittweise erfolgen. Synchron zur Lehrschrittfolge werden die akustischen Informationen, etwa die sprachliche Erläuterung der Lehrschritte, über ein akustisches Ausgabemedium dargeboten.

Die Daten des Digitalkanals können mit einer Kennung versehen sein, die bestimmt, ob die Daten nur auf dem Bildschirm angezeigt oder auch in die Datenverarbeitungsanlage zur Verarbeitung eingegeben werden sollen.

Gemäß einer Weiterbildung der Erfindung sind nur einzelne Teile der Bildschirmfläche dem Lehrstoffspeicher zugeordnet, während die restliche Fläche der Datenverarbeitungsanlage zugeordnet ist. Dadurch ist es möglich, die Lehrschritte mit von der Datenverarbeitungsanlage stammenden Informationen zu ergänzen, oder den Benutzer zum Fortsetzen einer vorgegebenen Lehrschrittfolge über die Arbeitsplatztastatur aufzufordern. Die von ihm eingetasteten Daten werden auf der der Datenverarbeitungsanlage zugewiesenen Bildschirmfläche angezeigt.

Der Lehrstoffspeicher kann einen weiteren Digitalkanal enthalten, in dem beispielsweise die von dem Benutzer als Reaktion auf akustische Weisungen erwarteten Eingaben gespeichert sind. Nach Ende der Eingabe werden die eingegebenen mit den erwarteten Daten verglichen. Abhängig von dem Vergleichsergebnis ist die Wiederholung des Lehrabschnittes oder der Fortgang der Unterweisung steuerbar.

Es kann ein weiterer Tonkanal im Lehrstoffspeicher vorgesehen sein, zu dem abhängig von dem vorgenannten Vergleichsergebnis umgeschaltet wird. Dort kann beispielsweise eine sprachliche Erläuterung eines Eingabefehlers gespeichert sein.

In weiteren Tonkanälen können beispielsweise sprachliche Unterweisungen in verschiedenen Sprachen gespeichert sein.

Der Lehrstoffspeicher kann sowohl fest oder austauschbar in einem Schulungsgerät angeordnet sein oder sich an einem dem Bildschirmarbeitsplatz fernen Ort befinden. Im letzten Fall greift das Schulungsgerät über eine Datenverbindung, z. B. das Telefonnetz, auf den Lehrstoffspeicher zu.

Als Beispiel für das erfindungsgemäße Verfahren wird im folgenden das Erstellen eines BASIC-Programms in einer Lektion erläutert.

Dieses Programm bestehe aus den folgenden Programmschritten :

```
 1) BASIC
 2) NEW
 3) 100 REM ADD*230384*HH
 4) 110 REM Addition zweier Zahlen
 5) 120 DIM A, B, C
 6) 130 INPUT A
 7) 140 PRINT
 8) 150 INPUT B
 9) 160 PRINT
10) 170 LET S = A+B
11) 180 PRINT
12) 180 PRINT « Die Summe von « ;A; » und
« ;B; » ist « ;S; »
13) 200 END
14) RUN
15) 10
16) 20
17) Die Summe von 10 und 20 ist 30
```

Zum Einrichten der Lektion wird der Digitalkanal des Lehrstoffspeichers in geeigneter Weise mit einer Datenverarbeitungsanlage und der Tonkanal mit elektrischen Schallquellen, z. B. Mikrofonen, verbunden.

Der Ersteller der Lektion spricht zunächst einige erklärende Worte in ein Mikrofon. Diese werden in dem dem Mikrofon zugeordneten Tonkanal gespeichert. Nun wird unter mündlicher Erläuterung der Programmschritt 1 über die Arbeitsplatztastatur der Datenverarbeitungsanlage eingegeben und in dem Digitalkanal gespeichert. In gleicher Weise werden auch die folgenden Programmschritte eingegeben und erläutert.

Nach Eingabe des Programmschrittes 14 führt die Datenverarbeitungsanlage das Programm aus. Der Ersteller spricht nun die Aufforderung aus, die Summanden — hier die Werte A und B — einzugeben und tastet dabei die Werte 10 und 20 ein (Programmschritt 15 und 16). Beides wird in den entsprechenden Kanälen des Lehrstoffspeichers gespeichert. Die Datenverarbeitungsanlage zeigt nun das Rechenergebnis (Programmschritt 17) auf dem Bildschirm an. Gleichzeitig wird das Ergebnis in dem Digitalkanal des Lehrstoffspeichers gespeichert.

Wenn man in einer weiteren Ausbaustufe mehrere Digital- und Tonkanäle vorsieht, ist es in dem beschriebenen Beispiel auch möglich, zunächst nur die Programmschritte 1 bis 13 in der beschriebenen Weise in den Lehrstoffspeicher einzuspeichern. Im 14. Lehrschritt wird der Benutzer aufgefordert, den Befehl einzugeben, der den Ablauf des Programms einleitet. Darauf wird in den weiteren Digitalkanal der 14. Befehl « RUN » eingegeben. Im ersten Tonkanal kann dann die Sprachmitteilung « Richtig » und in einem zweiten Tonkanal der Kommentar « Falsch » eingespeichert werden.

Selbstverständlich ist es auch möglich, zunächst nur die programmschritte auf der Arbeitsplatztastatur einzutasten und in dem Digitalkanal zu speichern. Der Ersteller kann dann zu einem späteren Zeitpunkt die abgespeicherten programmschritte wieder auf dem Bildschirm sichtbar machen und dabei den Kommentar sprechen und im Tonkanal speichern.

In regelmäßigen Abständen kann ein Synchronsignal in dem Digitalkanal gespeichert werden. Nach dem Synchronsignal wird, gesteuert von dem Erstellungsprogramm in der Datenverarbeitungsanlage, ein Bildschirmlöschbefehl im Digitalkanal abgespeichert. Daran anschließend werden alle Daten, die zum Aufbau des bis dahin gültigen Bildes erforderlich sind, erneut in dem Digitalkanal gespeichert.

Zum Nutzen einer so erstellten Lektion wird mit der Tastatur der Datenverarbeitungsanlage ein Startbefehl gegeben, so daß der Lehrstoffspeicher gelesen wird und die in ihm gespeicherten Daten bzw. Informationen bildlich und akustisch so wiedergegeben, wie sie beim Erstellen der Lektion abgespeichert wurden. Wird der Ablauf der Lektion durch Eingabe eines Stop-Befehls unterbrochen, so wird das Lesen bis zum nächstfolgenden Synchronsignal noch fortgesetzt und erst dann beendet, so daß nach erneutem Start sofort wieder ein gültiges Bild auf dem Bildschirm erscheint.

Liegt dem Benutzer eine Lektion vor, die nach der oben beschriebenen weiteren Ausbaustufe erstellt wurde, so wird er nach dem 13. Programmschritt die Aufforderung hören, den Programmablaufbefehl auf der Tastatur einzugeben. Von dem Steuerprogramm, das den Ablauf der Lektion steuert und das mit dem Rechner des Bildschirmarbeitsplatzes arbeitet, wird auf den weiteren Digitalkanal des Lehrstoffspeichers umgeschaltet, in dem der erwartete Befehl « RUN » gespeichert ist. Das Steuerprogramm vergleicht den eingegebenen mit dem erwarteten Befehl.

Wurde der richtige Befehl eingegeben, läuft die Lektion weiter ab, und der Benutzer hört die Bestätigung. Bei einem falschen Befehl ist das Vergleicherergebnis negativ, und vom Steuerprogramm wird ein Umschaltbefehl auf den weiteren Tonkanal ausgegeben. Der Benutzer hört dann den Kommentar « Falsch ». Abhängig vom Aufbau des Lehrstoffs und des Steuerprogramms kann darauf in den weiteren Ablauf der Lektion zurückgesprungen oder der letzte Lehrschritt wiederholt werden.

Im folgenden wird als Ausführungsbeispiel eine Einrichtung, mit der das Verfahren durchgeführt werden kann, anhand der Figuren beschrieben. Es zeigen :

Fig. 1 den Anschluß eines Schulungsgerätes und eines Lehrstoffspeichers an eine Datenverarbeitungsanlage und

Fig. 2 ein Prinzipbild des Schulungsgerätes mit Lehrstoffspeicher.

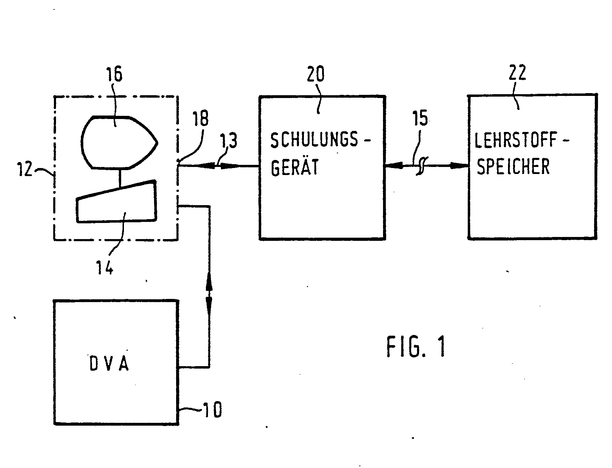

In Fig. 1 ist eine Datenverarbeitungsanlage 10 dargestellt. An diese ist in bekannter Weise ein Bildschirmarbeitsplatz 12 mit Tastatur 14 und Bildschirm 16 angeschlossen. Der Bildschirmarbeitsplatz 12 hat einen Schnittstellenanschluß 18 z. B. nach CCITT RS 232/V24. An diesen ist ein Schulungsgerät 20 angeschlossen, das seinerseits mit einem Lehrstoffspeicher 22 verbunden ist. Diese Verbindungen 13 und 15 sind Zweirichtungsverbindungen.

Der Benutzer kann beispielsweise durch Betätigen einer START-Taste den Ablauf der Unterweisung starten und durch eine STOP-Taste unterbrechen bzw. beenden. Weitere Befehlstasten wie « ZURÜCK », « VOR » zum Wiederholen oder Überspringen eines Lehrabschnittes, « LANGSAMER », « SCHNELLER » zur Verlängerung oder Abkürzung der Pausen zwischen den einzelnen Lehrschritten, « VERZWEIGUNG » zur Auswahl beispielsweise eines anderen Schwierigkeitsgrades des Lehrstoffs oder der Sprache der akustischen Informationen können vorgesehen sein.

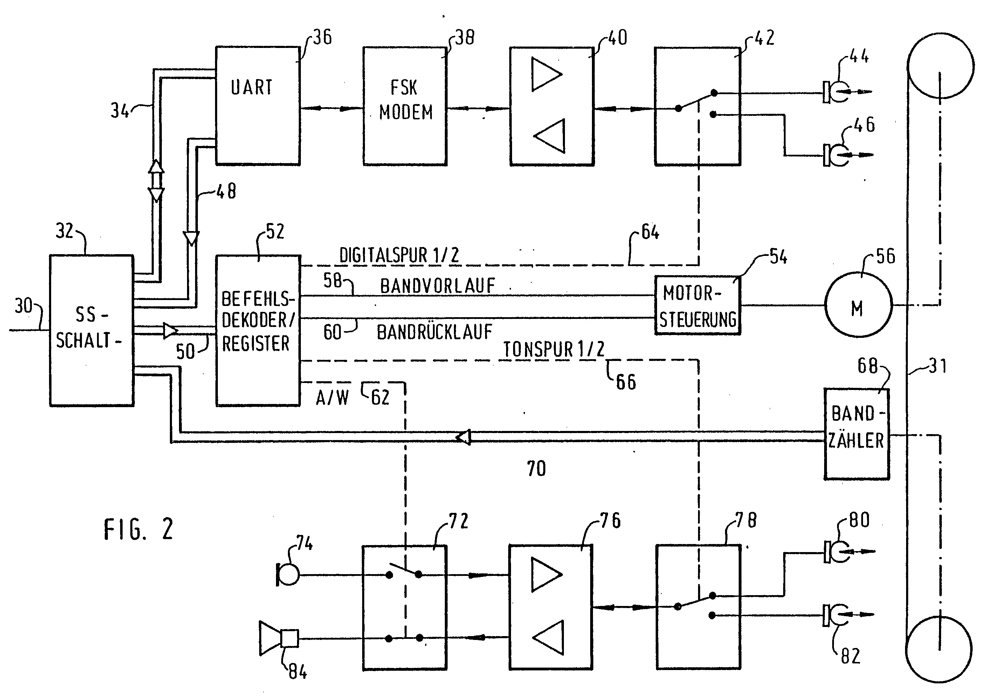

Fig. 2 zeigt das Schulungsgerät 20 aus Fig. 1 und den Lehrstoffspeicher, der hier durch ein Magnetband 31 gebildet ist. Dieses kann Bestandteil einer handelsüblichen vierspurigen Stereotonbandkassette sein.

Die Datenverbindung 30 des Schulungsgerätes verbindet eine Schnittstellenschaltung 32 mit dem Schnittstellenanschluß 18 des Bildschirmarbeitsplatzes 12 (Fig. 1). Die Schnittstellenschaltung 32 wandelt die vom Bildschirmarbeitsplatz 12 abgegebenen bitseriellen Daten- und Befehlsworte in bitparallele Informationen und serialisiert die zum Bildschirmarbeitsplatz 12 zu sendenden bitparallelen Informationen. Ferner werden die vom Bildschirmarbeitsplatz 12 empfangenen Informationen nach Daten- und Befehlsworten getrennt.

Die Datenworte gelangen über einen bidirektionalen Datenbus 34 zu den Paralleldaten-Ein-/Ausgängen einer Universellen Asynchronen Sende/Empfangsschaltung 36, allgemein als UART bekannt. Solche Schaltungen dienen dazu, parallele Daten zu serialisieren und den so gewonnenen Bitstrom mit Start- und Stopbits und einem Prüfbit zu versehen. Die so gebildeten seriellen Datenworte werden in einem mit Frequenzumtastung arbeitenden FSK-Modem 38 moduliert, in einem Zweirichtungsanalogverstärker 40 verstärkt und über eine Weichenschaltung 42 einem der Schreib-/Leseköpfe 44, 46 für die Digitalspuren des Magnetbandes 31 zugeführt. Von diesem Kopf wird die Digitalinformation als analoges Zweitonsignal auf die ihm zugeordnete Spur des Magnetbandes 31 geschrieben.

Das Lesen der Digitalspur erfolgt in der umgekehrten Richtung : das Zweitonsignal wird von einem der Schreib-/Leseköpfe 44, 46 vom Magnetband 31 gelesen und über die Weichenschaltung 42 und den Verstärker 40 dem FSKModem 38 zugeführt. Dort wird das Zweitonsignal in einen seriellen Digitaldaten-Bitstrom zurückgewandelt. Dieser Bitstrom gelangt an die Sende-/Empfangsschaltung 36, wo er in ein bitparalleles Datenwort zurückgewandelt wird.

In der Sende-/Empfangsschaltung 36 wird der Serialdatenstrom in bekannter Weise auf Paritäts-, Synchron- und Zeitfehler untersucht. Die daraus gewonnenen Fehlermeldungen werden über einen Statusbus 48 ebenso wie die bitparallelen Datenworte, die über den Datenbus 34 gelangen, der Schnittstellenschaltung 32 zugeführt, von wo sie über die Datenverbindung 30 zum Rechner des Bildschirmarbeitsplatzes (Fig. 1) gelangen.

Die vom Bildschirmarbeitsplatz 12 empfangenen und in der Schnittstellenschaltung 32 ausgekoppelten Befehlsworte gelangen über einen Befehlsbus 50 zu einem Befehlsdekoder/-Register 52. Die parallelen Befehlsworte werden hier entschlüsselt und gespeichert nach

— Bandvorlauf 58
— Bandrücklauf 60
— Aufnahme/Wiedergabe 62
— Digitalspur 1/2 64
— Tonspur 1/2 66

Mit dem Laufwerk für das Magnetband 31 ist ein Bandlängenzähler 68 wirkverbunden, dessen paralleler Datenausgang über einen Bandlangenbus 70 an die Schnittstellenschaltung 32 angeschlossen ist. Damit ist es dem Rechner des Bildschirmarbeitsplatzes möglich, gezielt über die Befehle « Bandvorlauf » 58 und « Bandrücklauf » 60 bestimmte Bandstellen anzusteuern.

Zum Aufzeichnen von Toninformationen auf eine der Tonspuren des Magnetbandes 31 wird mittels des Befehls « Aufnahme/Wiedergabe » 62 eine zweite Weichenschaltung 72 so geschaltet, daß die Tonquelle, hier ein Mikrofon 74, auf einen zweiten Zweirichtungsverstärker 76 geschaltet wird. Das dort verstärkte Tonsignal gelangt über eine dritte Weichenschaltung 78 an einen der Schreib-/Leseköpfe 80, 82 für die Tonspuren. Welche der Tonspuren angesteuert wird, wird durch die dritte Weichenschaltung 78 bestimmt.

Zum Abhören einer Tonspur wird der dieser Tonspur zugeordnete Schreib-/Lesekopf 80, 82 über die dritte Weichenschaltung 78 an den zweiten Zweirichtungsverstärker 76 angeschaltet. Der Ausgang dieses Verstärkers führt über die zweite Weichenschaltung 72, die in Betriebsart « Wiedergabe » geschaltet ist, zu einer Tonwiedergabeanordnung, hier ein Lautsprecher 84.

Das oben beschriebene Ausführungsbeispiel zeigt ein relativ komfortables Gerät. Für viele Anwendungsfälle genügt es, dem Benutzer ein reines Wiedergabegerät zur Verfügung zu stellen. In diesem Fall sind die Verstärker 40 und 76 Einrichtungsverstärker, an Stelle des FSKModem 38 genügt ein FSK-Demodulator, und die zweite Weichenschaltung 72 kann entfallen.

Bei Verzicht auf die in der Verfahrensbeschreibung erläuterte Verzweigung in verschiedene Digital- und Tonkanäle ist nur ein Lesekopf für die Digitalspur 44 bzw. 46 und nur ein Lesekopf für die Tonspur 80 bzw. 82 vorgesehen. Damit entfallen auch die Weichenschaltungen 42 und 78. Da das Lehrprogramm im einfachsten Fall linear fortschreitend aufgebaut ist und damit kein Suchlauf auf beliebige Lehrschritte erforderlich ist, kann dann auch der Bandzähler 68 entfallen.

**Patentansprüche**

1. Verfahren zum Anwenden einer Datenverarbeitungsanlage mit Informationseingabegerät und Informationsdarstellungsgerät zum Unterweisen in ihre Bedienung, dadurch gekennzeichnet, daß zum Erstellen einer Lektion mit dem Informationseingabegerät Daten eines der Unterweisung zugrunde liegenden Betriebsablaufs einerseits in die Datenverarbeitungsanlage, andererseits mit dazu synchronen akustischen Informationen in einen separaten Informationsspeicher eingegeben werden und daß beim Nutzen einer Lektion, gesteuert durch das Informationseingabegerät, ein Lesen des separaten Informationsspeichers mit Darstellung und, falls die gelesenen Daten mit einer die Verarbeitung dieser Daten in der Datenverarbeitungsanlage bestimmenden Kennung versehen sind, Eingabe der gelesenen Daten in die Datenverarbeitungsanlage sowie eine dazu synchrone Wiedergabe der akustischen Information erfolgt.

2. Verfahren nach Anspruch 1, dadurch gekennzeichnet, daß die Daten und die akustischen Informationen in vorgegebenen Unterweisungsschritten in den separaten Informationsspeicher eingegeben bzw. aus ihm ausgelesen werden.

3. Verfahren nach Anspruch 1 oder 2, dadurch gekennzeichnet, daß die Daten mit einer Kennung in den separaten Informationsspeicher eingegeben werden, die Kriterium dafür ist, ob die Daten beim Lesen des Informationsspeichers auch in die Datenverarbeitungsanlage einzugeben sind.

4. Verfahren nach einem der vorhergehenden Ansprüche, dadurch gekennzeichnet, daß die gelesenen Daten nur in einem ihnen besonders zugeordneten Abschnitt des Informationsdarstellungsgeräts wiedergegeben werden.

5. Verfahren nach einem der Ansprüche 1 bis 3, dadurch gekennzeichnet, daß in den separaten Informationsspeicher parallel zu den Daten zusätzliche Informationen eingegeben werden, die beim Lesen des Informationsspeichers mit durch die Unterweisung veranlaßten Eingaben verglichen werden.

6. Verfahren nach Anspruch 5, dadurch gekennzeichnet, daß in den separaten Informationsspeicher parallel zu den zusätzlichen Informationen akustische Informationen eingegeben werden, auf die beim Lesen bei Eintreten eines vorbestimmten Vergleichsergebnisses umgeschaltet wird.

7. Verfahren nach einem der vorhergehenden Ansprüche, dadurch gekennzeichnet, daß die synchrone Eingabe von Daten und akustischen Informationen in den separaten Informationsspeicher zusammen mit Synchronsignalen erfolgt und daß eine über das Informationseingabegerät veranlaßte Unterbrechung des Lesevorgangs jeweils bei einem nächstfolgend gelesenen Synchronsignal wirksam wird.

8. Einrichtung zum Durchführen des Verfahrens nach einem der vorhergehenden Ansprüche, mit einer Datenverarbeitungsanlage mit Informationseingabegerät und Informationsdarstellungsgerät, gekennzeichnet durch einen separaten Informationsspeicher (22), der mittels einer Zweirichtungsverbindung über ein Schulungsgerät (20) mit dem Informationseingabegerät (14) und dem Informationsdarstellungsgerät (16) bzw. mit der Datenverarbeitungsanlage (10) verbunden ist, welches eine die Daten aufnehmende bzw. abgebende, dem Informationsspeicher (22) zugeordnete Sende-Empfangsschaltung (36) und eine empfangende Befehlsworte aufnehmende Dekodier-Registrierschaltung (52) enthält, die Steuersignale für den Informationsspeicher (22) sowie für ein akustisches Aufnahme- und/oder Wiedergabegerät (72, 76, 78) abgibt.

9. Einrichtung nach Anspruch 8, dadurch gekennzeichnet, daß der Informationsspeicher (22) mehrere parallele, voneinander unabhängig beschreibbare bzw. lesbare Speicherkanäle hat.

10. Einrichtung nach Anspruch 8 oder 9, dadurch gekennzeichnet, daß der separate Informationsspeicher ein Magnetbandspeicher (31) ist.

11. Einrichtung nach Anspruch 10, dadurch gekennzeichnet, daß der Magnetbandspeicher (31) mit mehreren Digitalspuren und mehreren Tonspuren versehen ist.

12. Einrichtung nach Anspruch 10 oder 11, dadurch gekennzeichnet, daß der Magnetbandspeicher einen Bandlängenzähler (68) enthält, der mit dem Rechner der Datenverarbeitungsanlage (10) verbindbar ist.

## Claims

1. A method whereby data processing equipment comprising an information input device and an information display device is used for instruction in the operation thereof, characterised in that in order to plan a lesson, data of an operating sequence used for instruction are input by the information input device on the one hand into the data processing equipment and on the other hand, together with synchronous acoustic information, into a separate information memory and that, when a lesson is used, controlled by the information input device, the separate information memory and display are read and, if the read data have a characteristic determining processing of these data in the data processing equipment, the read data are input into the data processing equipment and the acoustic information is reproduced in synchronism therewith.

2. A method according to claim 1, characterised in that the data and the acoustic information are input into or read out of the separate information memory in preset instructional stages.

3. A method according to claim 1 or 2, characterised in that the data fed into the separate information memory have a characteristic which is a criterion whether the data are also to be input into the data processing equipment when the information memory is read.

4. A method according to any of the preceding claims, characterised in that the read data are reproduced only in a portion of the information display device which is specially associated therewith.

5. A method according to any of claims 1 to 3, characterised in that additional information in parallel to the data is input into the separate information memory and, when the information memory is read, is compared with the inputs resulting from the instruction.

6. A method according to claim 5, characterised in that acoustic information in parallel to the additional information is supplied to the separate information memory and is switched over to during reading if the comparison yields a predetermined result.

7. A method according to any of the preceding claims, characterised in that data and acoustic information are input in synchronism into the separate information stores together with synchronization signals, and that any interruption to the reading process via the information input device becomes operative during the next-read synchronization signal.

8. Apparatus for working the method according to any of the preceding claims, comprising data processing equipment with an information input device and an information display device, characterised by a separate information memory (22) connected by a two-way connection via a training device (20) to the information input device (14) and the information display device (16) or to the data processing equipment (10), which contains a transmitting and receiving circuit (36) receiving or transmitting the data and associated with the information memory (22) and also contains a receiving decoding and registering circuit (52) which records command words and transmits control signals for the information memory (22) and for an acoustic recording and/or reproduction unit (72, 76, 78).

9. Apparatus according to claim 8, characterised in that the information memory (22) has a number of parallel storage channels which can be independently written into or read.

10. Apparatus according to claim 8 or 9, characterised in that the separate information memory is a magnetic tape memory (31).

11. Apparatus according to claim 10, characterised in that the magnetic tape memory (31) has a number of digital tracks and a number of sound tracks.

12. Apparatus according to claim 10 or 11, characterised in that the magnetic tape memory contains a tape-length counter (68) for connecting to the computer in the data processing equipment (10).

## Revendications

1. Procédé d'utilisation d'une installation de traitement des données avec un appareil d'entrée des informations et un appareil de représentation des informations, pour l'initiation à son utilisation, caractérisé en ce que, pour la préparation d'une leçon avec l'appareil d'entrée des informations, des données d'une séquence de travail prise comme base de l'initiation sont introduites d'une part, dans l'installation de traitement des données et, d'autre part, dans une mémoire séparée des informations avec des informations acoustiques qui leur sont synchrones, et en ce que, lors de l'utilisation d'une leçon, il est procédé, pilotée par l'appareil d'entrée des données, à une lecture de la mémoire séparée des informations avec représentation et, dans le cas où les données lues sont prévues avec un signe distinctif déterminant le traitement de ces données dans l'installation de traitement des données, à l'introduction dans l'installation de traitement des données des données lues ainsi qu'à une reproduction synchrone des informations acoustiques.

2. Procédé selon la revendication 1, caractérisé en ce que les données et les informations acoustiques sont introduites dans la mémoire séparée des informations et sont extraites de cette mémoire respectivement par séances prédéfinies d'initiation.

3. Procédé selon la revendication 1 ou 2, caractérisé en ce que les données sont introduites dans la mémoire séparée des informations avec un signe distinctif qui est le critère déterminant si, lors de la lecture de la mémoire des informations, les données doivent être introduites aussi dans l'installation de traitement des données.

4. Procédé selon l'une quelconque des revendications précédentes, caractérisé en ce que les données lues ne sont reproduites que dans une section de l'unité de représentation des informations qui leur est particulièrement attribuée.

5. Procédé selon l'une quelconque des revendications 1 à 3, caractérisé en ce que, dans la mémoire séparée des informations sont introduites parallèlement aux données des informations supplémentaires qui, au cours de la lecture de la mémoire des informations sont comparées à des entrées produites par l'initiation.

6. Procédé selon la revendication 5, caractérisé en ce que, dans la mémoire séparée des informations sont introduites, parallèlement aux informations supplémentaires, des informations acoustiques auxquelles il est commuté au cours de la lecture lors de la survenance d'un résultat de comparaison prédéfini.

7. Procédé selon l'une quelconque des revendications précédentes, caractérisé en ce que l'introduction synchrone de données et d'informations acoustiques dans la mémoire séparée d'informations s'effectue en même temps que des signaux de synchronisation et en ce que l'interruption de l'opération de lecture provoquée par l'intermédiaire de l'appareil d'entrée des informations prend effet chaque fois lors de la lecture du signal de synchronisation juste suivant.

8. Equipement pour la mise en œuvre du procédé selon l'une quelconque des revendications précédentes, avec une installation de traitement des données, avec un appareil d'entrée des informations et un appareil de représentation des informations caractérisé par une mémoire séparée (22) des informations qui, au moyen d'une liaison bi-directionnelle, est reliée par l'intermédiaire d'un appareil d'instruction (20), d'une part à l'appareil d'entrée des informations (14) et à l'appareil de représentation des informations (16), et d'autre part à l'installation de traitement des données (10), cette même mémoire contenant un circuit émetteur-récepteur (36) associé à la mémoire séparée (22) des informations saisissant et délivrant respectivement les données, et un circuit décodeur-enregistreur (52) saisissant des mots d'instruction pour la réception, qui émet des signaux de commande pour la mémoire d'informations (22) ainsi que pour un appareil acoustique d'enregistrement et/ou de reproduction (72, 76, 78).

9. Equipement selon la revendication 8, caractérisé en ce que la mémoire d'informations (22) à plusieurs canaux de mémoire parallèles sur lesquels il est possible respectivement d'écrire et de lire indépendamment les uns des autres.

10. Equipement selon la revendication 8 ou 9, caractérisé en ce que la mémoire séparée des informations est une mémoire à ruban magnétique (31).

11. Equipement selon la revendication 10, caractérisé en ce que la mémoire à ruban magnétique (31) est pourvue de plusieurs pistes numériques et de plusieurs pistes de son.

12. Equipement selon la revendication 10 ou caractérisé en ce que la mémoire à ruban magnétique contient un compteur de longueur de bande (68) qui peut être relié au calculateur de l'installation de traitement des données (10).

FIG. 1

FIG. 2